# DEMANDE DE BREVET EUROPEEN

(11) **EP 4 789 871 A1**
(43) Date de publication de la demande: **12.08.2026**
(21) Numéro de dépôt: 25217333.1
(22) Date de dépôt: 20.11.2025
(51) Int. Cl.: B41J 3/407, B41J 2/44, B23K 26/067, B23K 26/08, B23K 26/352, B23K 26/362, B23K 26/082, B41J 11/00, B23K 26/06

(54) **INSTALLATION DE MARQUAGE DE RÉCIPIENTS EN MATIÈRE THERMOPLASTIQUE OBTENUS PAR UN PROCÉDÉ DE SOUFFLAGE-ÉTIRAGE**

(30) Priorité: 05.02.2025 FR 2501192
(71) Demandeur: Sidel Participations, 76930 Octeville-sur-Mer (FR)
(72) Inventeur: FEUILLOLEY, Guy, 76930 OCTEVILLE-SUR-MER (FR); BERNARD, Véronique, 76930 OCTEVILLE-SUR-MER (FR); SAVARY, Cyrille, 76930 OCTEVILLE-SUR-MER (FR); LECOMTE, Frédéric, 76930 OCTEVILLE-SUR-MER (FR); DIESNIS, Daniel, 76930 OCTEVILLE-SUR-MER (FR); CHAUVIN, Guillaume, 76930 OCTEVILLE-SUR-MER (FR)
(74) Mandataire: Sidel Group

(57) **Abrégé**

La présente invention concerne une installation de marquage de récipients (1) en matière thermoplastique obtenus par un procédé de soufflage-étirage, notamment des bouteilles ou flacons, ledit récipient (1) comportant au moins un corps (2), une épaule (3) dans le prolongement dudit corps (2) à une extrémité supérieure de celui-ci, un col (4) dans le prolongement de l'épaule (3) et une paroi (5), ladite paroi (5) comprenant au moins une région (6) dites d'informations, remarquable en ce que ladite installation comprend au moins :
- deux convoyeur (7a,7b) apte à faire circuler lesdits récipients (1) le long de deux trajets de circulation distincts sur deux lignes de conditionnement distinctes depuis une entrée (E) jusqu'à une sortie (S) de chaque convoyeur (7a,7b) ;
- une pluralité de dispositifs de marquage laser (8) apte à apposer des informations dans ladite au moins une région d'informations (6), dite région de marquage laser d'un récipient (1), chaque dispositif de marquage (8) étant positionné entre les deux convoyeurs (7a,7b) et étant aptes à apposer alternativement des informations dans la région d'informations (6) d'un récipient (1) d'un premier convoyeur (7a ou 7b) puis dans la région d'informations (6) d'un récipient (1) du second convoyeur (7b ou 7a).

## Description

### Domaine technique

La présente invention concerne le domaine des récipients, notamment bouteilles ou pots, fabriqués par soufflage ou étirage soufflage à partir d'ébauches en matière plastique telle que du polyéthylène téréphtalate (PET) et/ou du polyéthylène téréphtalate recyclé (rPET) et, plus particulièrement, une installation de marquage et un dispositif de marquage de tels récipients.

### Etat de la technique

Dans le domaine de la fabrication de récipients en PET, telles que des bouteilles, il est bien connu de faire figurer sur lesdits récipients des informations telles que la contenance, la composition du contenu des récipients, la date de péremption, etc. et/ou des décorations telles que le logo du fabricant du produit par exemple.

Usuellement, lesdites informations figurent sur des étiquettes en papier ou en plastique qui sont collées sur le récipient final après l'étape de formage du récipient, ou après l'étape de remplissage du récipient, c'est-à-dire lorsque les récipients sont conformés dans leur forme définitive.

Toutefois, l'étiquetage des récipients présente de nombreux inconvénients. En effet, la fabrication des étiquettes, leur impression et leur collage sur les récipients représentent un coût élevé, notamment pour la fabrication de récipients en grandes séries. En outre, l'étiquette est susceptible d'être arrachée pendant la manipulation du récipient, l'utilisateur final ne pouvant alors plus accéder à certaines informations importantes, telle que la date de péremption. Enfin, le recyclage des récipients en PET est compliqué par la présence de l'étiquette et de la colle, ces dernières constituant des impuretés qui rendent opaques et altèrent les propriétés mécaniques des récipients obtenus à partir du PET recyclé (rPET).

Pour l'inscription des informations importantes, on a déjà proposé des procédés de marquage de la paroi du récipient. Ainsi, il est connu d'imprimer directement sur la paroi du récipient certaines informations importantes au moyen d'une encre spéciale.

Néanmoins, ce procédé de marquage par impression n'est pas satisfaisant car, pour des raisons d'hygiène, l'encre utilisée pour le marquage doit sécher quasi instantanément, et elle doit aussi rester à la surface de la paroi sans pénétrer à l'intérieur du récipient par un phénomène de migration. De ce fait l'encre présente une composition spécifique qui est très onéreuse à fabriquer.

Par ailleurs, l'utilisation d'encre complique également les procédés de recyclage des récipients en plastique.

Pour contourner ces problèmes, on a aussi proposé un procédé de marquage par gravure de la paroi du récipient. La gravure est généralement effectuée au moyen d'un laser au dioxyde de carbone. Un tel procédé de marquage est réalisé en enlevant de la matière à la paroi du récipient, notamment par évaporation. De ce fait, la paroi présente localement une épaisseur réduite.

Cependant, dans un souci d'économie et d'écologie, on cherche à diminuer l'épaisseur de la paroi des récipients. Ainsi, il est possible de réaliser un récipient en utilisant moins de matériau plastique qu'auparavant. Or, l'enlèvement de matière sur une paroi très fine risque de fragiliser la paroi au point de crever le récipient à la moindre sollicitation.

D'autres dispositifs connus de marquage laser ont des problèmes de qualité par rapport aux pièces ou substrats qui ne sont pas plans et/ou qui ont une distance focale variable par rapport à l'optique, comme c'est le cas pour une grande majorité des récipients.

Dans un tel cas, les marquages sur le substrat sont flous, varient en hauteur ou en espacement et pourraient autrement être illisibles, rendant ainsi les caractères insatisfaisants à utiliser.

Pour contourner ce problème, il est souvent nécessaire d'arrêter le mouvement du récipient à marquer, ce qui va directement impacter la cadence de fonctionnement de la ligne industrielle.

A cet égard, on a déjà imaginé des installations de marquage laser de récipients en matière thermoplastique obtenus par un procédé de soufflage-étirage, notamment des bouteilles ou flacons. C'est le cas notamment des documents EP2380693, EP2983106, FR2907370 et CN116275544 notamment.

Le document EP2380693 décrit un système de marquage d'un objet, tel qu'un récipient, mobile au moyen d'un laser qui comprend un système laser avec un faisceau laser ayant la capacité de marquer à l'intérieur d'une zone de travail, avec un régulateur, un système d'entraînement avec la capacité de déplacer l'objet à marquer avec un régulateur de vitesse, et un système de capteur pour obtenir la position de l'objet à marquer, le système laser et le système de capteur étant connectés de telle sorte que le régulateur pour le système laser a une entrée de signal correspondant à un signal de position provenant du système de capteur. Le système laser et le système d'entraînement sont connectés de telle sorte que le régulateur de vitesse pour le système d'entraînement reçoit un signal de variation de vitesse en provenance du régulateur pour le système laser qui est une fonction du signal de position reçu par le système laser par rapport à la zone de travail et de la position du faisceau laser à l'intérieur de la zone de travail.

Le document EP2983106 décrit un procédé et un système d'impression d'informations sur un récipient. Le procédé consiste à fournir un système d'impression ayant une source laser destinée à produire un faisceau d'impression et à orienter ledit faisceau vers plusieurs emplacements sur un matériau, et/ou à régler un temps d'imprégnation du faisceau d'impression en au moins un emplacement de façon à former un repère à chaque emplacement. Le procédé peut également consister à fournir un système d'impression destiné à imprimer un code sur un produit se déplaçant dans une direction, et/ou à imprimer le code en fonction d'un jeu de données corrigées. Le système comporte un laser conçu pour produire un faisceau d'impression, le laser étant au maximum de 25 watt, et un boîtier comprenant un élément de sortie de faisceau d'impression par lequel ledit faisceau quitte le boîtier. Le système comprend enfin à l'intérieur du boîtier un ensemble optique qui permet de concentrer le faisceau d'impression sur un produit jouxtant le boîtier.

Le document FR2907370 décrit une installation pour marquer, en sortie d'une machine de formage, des objets transparents ou translucides défilant en translation successivement devant un poste de marquage comportant un appareil de production d'un faisceau laser pour assurer un marquage des objets. Ladite installation comporte des moyens de détermination de la position de chacun des objets selon au moins une direction transversale à la direction de défilement des objets, ces moyens étant placés en amont du poste de marquage par rapport au sens de défilement, des moyens de déplacement du plan de focalisation du faisceau laser, selon une direction transversale par rapport à la direction de défilement, des moyens de pilotage des moyens de déplacement, reliés aux moyens de détermination, et permettant d'adapter, en fonction de la position de chaque objet à marquer, le plan de focalisation du faisceau laser pour optimiser le marquage des objets par le faisceau laser.

Le document CN116275544 décrit un système de marquage laser par lots de corps de bouteilles en plastique qui comprend un premier dispositif de transport à vis, un premier dispositif de saisie et de transport de bouteilles, un premier dispositif de transport de produits finis et un réseau de dispositifs de marquage laser volants. Le réseau de dispositifs de marquage laser volant comprend plusieurs dispositifs de marquage laser volant, une station de marquage laser est disposée devant une tête de balayage laser de chaque dispositif de marquage laser volant, et le premier dispositif de saisie et de transport de bouteilles saisit les ouvertures de bouteilles en plastique disposées à intervalles égaux et transporte les ouvertures de bouteilles vers les stations de marquage laser correspondantes du réseau de dispositifs de marquage laser volant. Le réseau de dispositifs de marquage laser volant effectue un marquage laser et un dessin sur les corps de bouteilles en plastique disposés à intervalles égaux, et le premier dispositif de saisie et de transport des bouteilles saisit les corps de bouteilles en plastique soumis au marquage laser et les transporte vers le premier dispositif de transport des produits finis pour les acheminer vers la station de production suivante.

Toutefois, tous ces dispositifs de marquage laser sur des récipients en matière plastique présentent l'inconvénients de ne pas permettre le marquage des récipients à des hautes cadences, c'est-à-dire des cadences supérieures à 4000 bouteilles par heure.

### Divulgation de l'invention

L'un des buts de l'invention est donc de remédier à tout ou partie de ces inconvénients en proposant une installation de marquage de récipients en matière plastique de conception simple et peu onéreuse permettant l'impression d'informations sur les récipients à de hautes cadences.

A cet effet, et conformément à l'invention, **il** est proposé une installation de marquage de récipients en matière thermoplastique obtenus par un procédé de soufflage-étirage, notamment des bouteilles ou flacons, ledit récipient comportant au moins un corps, une épaule dans le prolongement dudit corps à une extrémité supérieure de celui-ci, un col dans le prolongement de l'épaule, une paroi, ladite paroi comprenant au moins une région dites d'informations ; ladite installation est remarquable en ce qu'elle comprend au moins deux convoyeur apte à faire circuler lesdits récipients le long de deux trajets de circulation distincts sur deux lignes de conditionnement distinctes depuis une entrée jusqu'à une sortie de chaque convoyeur, et une pluralité de dispositifs de marquage laser apte à apposer des informations dans ladite au moins une région d'informations, dite région de marquage laser d'un récipient, chaque dispositif de marquage étant positionné entre les deux convoyeurs et étant aptes à apposer alternativement des informations dans la région de marquage laser d'un récipient d'un premier convoyeur puis dans la région de marquage laser d'un récipient du second convoyeur.

De préférence, chaque convoyeur consiste en un convoyeur à bande motorisé pas à pas.

Par ailleurs, lesdits deux convoyeurs sont positionnés parallèlement l'un par rapport à l'autre de telle sorte que les trajets de circulation des récipients sur lesdits convoyeurs présentent la même direction de circulation.

De plus, le pas de chaque convoyeur à bande est sensiblement égal à la distance séparant quatre récipients transportés par ledit convoyeur.

De manière avantageuse, le premier convoyeur à bande est déplacé d'un pas lorsque le second convoyeur à bande est à l'arrêt et inversement.

Par ailleurs, de préférence, ladite installation comporte au moins quatre dispositifs de marquage comportant des moyens d'émission d'un rayonnement laser suivant deux directions opposées, lesdits dispositifs de marquage étant positionnés de manière fixe à équidistance des deux convoyeurs, i.e. suivant une ligne médiane parallèle aux trajets de circulation des convoyeurs.

Lesdits dispositifs de marquage sont positionnés sur ladite ligne médiane à équidistance les uns des autres.

Selon un premier mode de réalisation, chaque dispositif de marquage comporte au moins une source laser, un commutateur de faisceau multicanal comportant une entrée du faisceau laser émis par la source laser et deux sorties d'un faisceau laser et deux têtes de balayage laser constituée d'un boitier comportant une fenêtre d'entrée laser apte à recevoir le faisceau laser émis par l'une des sorties du commutateur de faisceau multicanal, au moins un miroir galvanométrique monté sur l'arbre de rotation d'un moteur d'entrainement en rotation dudit miroir galvanométrique, et une fenêtre de sortie à travers laquelle le faisceau laser de marquage est émis.

Selon un second mode de réalisation, chaque dispositif de marquage comporte au moins une source laser et une tête de balayage laser constituée d'un boitier comportant une fenêtre d'entrée laser apte à recevoir le faisceau laser émis par la source laser, au moins un miroir galvanométrique monté sur l'arbre de rotation d'un moteur d'entrainement en rotation dudit miroir galvanométrique et deux fenêtres de sortie opposées à travers lesquelles le faisceau laser de marquage est émis alternativement à travers une première fenêtre de sortie et une seconde fenêtre de sortie.

Ledit boitier de chaque tête de balayage laser est sensiblement parallélépipédique, une des parois comportant la fenêtre d'entrée et deux autres parois opposées comportant respectivement une fenêtre de sortie.

Par ailleurs, chaque tête de balayage comporte un premier miroir galvanométrique s'étendant au droit de la fenêtre d'entrée et solidaire de l'arbre de sortie d'un premier moteur électrique, ledit premier miroir galvanométrique étant apte à réfléchir le faisceau laser passant par la fenêtre d'entrée vers un second miroir galvanométrique dit répartiteur s'étendant au droit des fenêtres de sortie et solidaire de l'arbre de sortie d'un second moteur électrique, l'arbre de sortie du second moteur électrique étant orthogonal à l'arbre de sortie du premier moteur électrique.

De manière alternative, chaque tête de balayage comporte un premier miroir galvanométrique s'étendant au droit de la fenêtre d'entrée et solidaire de l'arbre de sortie d'un premier moteur électrique, ledit premier miroir galvanométrique étant apte à réfléchir le faisceau laser passant par la fenêtre d'entrée vers un second miroir galvanométrique dit répartiteur et solidaire de l'arbre de sortie d'un second moteur électrique, l'arbre de sortie du second moteur électrique étant orthogonal à l'arbre de sortie du premier moteur électrique, ledit second miroir galvanométrique répartiteur réfléchissant le faisceau laser alternativement sur un troisième et un quatrième miroir galvanométrique s'étendant respectivement au droit des fenêtres de sortie, le troisième et le quatrième miroir galvanométrique étant solidaire de l'arbre de sortie d'un troisième moteur électrique et d'un quatrième moteur électrique respectivement.

De plus, les arbres de sortie du second moteur électrique, du troisième moteur électrique et du quatrième moteur électrique s'étendent parallèlement.

### Brève description des dessins

D'autres avantages et caractéristiques ressortiront mieux de la description qui va suivre de plusieurs variantes d'exécution, données à titre d'exemples non limitatifs, de l'installation de marquage de récipients en matière thermoplastique conforme à l'invention, en référence aux dessins annexés sur lesquels :
[Fig. 1] est une vue de dessus schématique de l'installation de marquage suivant l'invention,
[Fig. 2] est une vue de dessus schématique de l'installation de marquage suivant l'invention dans une seconde étape du procédé de marquage,
[Fig. 3] est une vue de dessus schématique de l'installation de marquage suivant l'invention dans une troisième étape du procédé de marquage,
[Fig. 4] est une vue de dessus schématique de l'installation de marquage suivant l'invention dans une quatrième et dernière étape du procédé de marquage,
[Fig. 5] est une représentation schématique d'un dispositif de marquage laser de l'installation de marquage suivant l'invention,
[Fig. 6] est une représentation schématique en perspective et en filaire de la tête de balayage laser du dispositif de marquage laser, représenté sur la figure 5, de l'installation de marquage suivant l'invention,
[Fig. 7] est une représentation schématique en perspective et en filaire de la tête de balayage laser d'une première variante d'exécution du dispositif de marquage laser de l'installation de marquage suivant l'invention,
[Fig. 8] est une représentation schématique en perspective et en filaire d'une seconde variante d'exécution de la tête de balayage laser du dispositif de marquage laser de l'installation de marquage suivant l'invention,
[Fig. 9] est une représentation schématique de face d'un récipient, montrant notamment deux zones de marquage laser.

### Mode de réalisation de l'invention

Dans la suite de la description, des éléments présentant une structure identique ou des fonctions analogues seront désignés par une même référence.

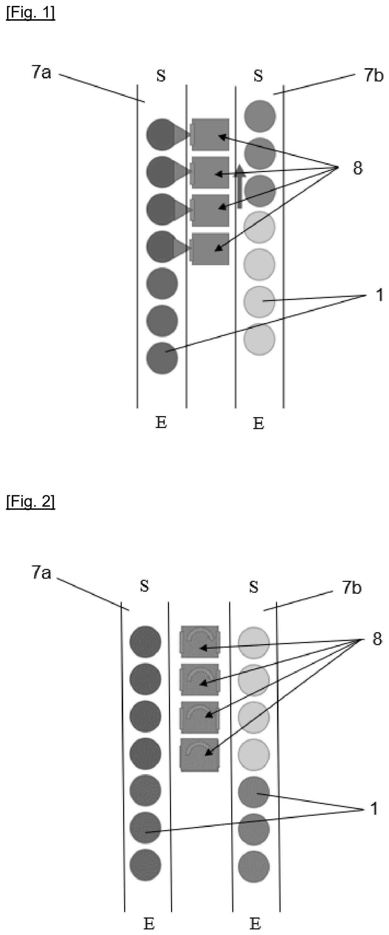

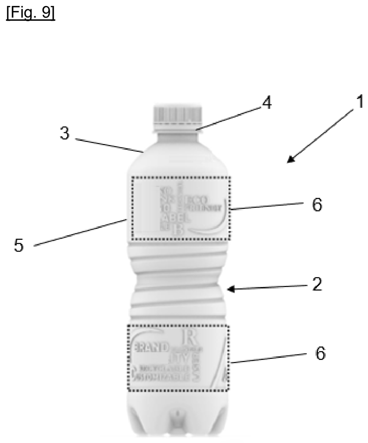

En référence à la figure 1, on décrira ci-après une installation de marquage de récipients 1 en matière thermoplastique obtenus par un procédé de soufflage-étirage, notamment des bouteilles ou flacons, à partir d'une préforme en matière plastique telle du polyéthylène téréphtalate (PET) et/ou du polyéthylène téréphtalate recyclé (rPET) ou similaire, ledit récipient 1 comportant, en référence à la figure 9, au moins un corps 2, une épaule 3 dans le prolongement dudit corps 2, à une extrémité supérieure de celui-ci, un col 4 dans le prolongement de l'épaule 3, ledit col recevant un bouchon, une paroi 5, ladite paroi comprenant deux régions dites d'informations 6. Dans cet exemple particulier, ladite paroi 5 comporte deux régions d'information ; Toutefois, il est bien évident que ladite paroi 5 du récipient 1 pourra comprendre qu'une seule région d'information 6 ou plus de deux régions d'informations 6 sans pour autant sortir du cadre de l'invention.

Par ailleurs, en référence à la figure 1, ladite installation comprend au moins deux convoyeurs 7a,7b aptes à faire circuler lesdits récipients 1 le long de deux trajets de circulation distincts sur deux lignes de conditionnement distinctes depuis une entrée (E) jusqu'à une sortie (S) de chaque convoyeur 7a,7b, et une pluralité de dispositifs de marquage laser 8 aptes à apposer des informations dans ladite au moins une région d'informations 6 des récipients 1, dite région de marquage laser d'un récipient, chaque dispositif de marquage étant positionné entre les deux convoyeurs 7a,7b et étant aptes à apposer alternativement des informations dans la région de marquage laser d'un récipient 1 d'un premier convoyeur 7a puis dans la région de marquage laser d'un récipient du second convoyeur 7b. Chaque convoyeur 7a,7b consiste en un convoyeur à bande motorisé pas à pas.

Il est bien évident que les convoyeurs 7a,7b à bande pourront être substitués par tout autre dispositif de convoyage équivalent, tel qu'un convoyeur à pinces saisissant les récipients 1 au niveau du col ou similaire, bien connu de l'homme du métier sans pour autant sortir du cadre de l'invention.

Lesdits convoyeurs 7a,7b comportent respectivement un dispositif d'écartement des récipients 1 afin que chaque récipient se présente en face de chaque dispositifs de marquage laser 8.

Par ailleurs, lesdits deux convoyeurs 7a,7b sont positionnés parallèlement l'un par rapport à l'autre de telle sorte que les trajets de circulation des récipients 1 sur lesdits convoyeurs 7a,7b présentent la même direction de circulation. Le pas de chaque convoyeur 7a,7b à bande est sensiblement égal à la distance séparant quatre récipients 1 transportés par ledit convoyeur 7a,7b. Comme il sera détaillé un peu plus loin, le premier convoyeur 7a à bande est déplacé d'un pas lorsque le second convoyeur 7b à bande est à l'arrêt et inversement.

Avantageusement, lesdits convoyeurs 7a,7b pourront comporter un dispositif d'ajustement de leur position par rapport aux dispositifs de marquage laser 8 afin de présenter les récipients 1 à la distance focale souhaitée. En effet, dans le cas où le marquage de récipients de diamètres différents pourraient être réalisé sur la même installation, on pourrait avoir à régler cette distance focale entre chaque production.

Par ailleurs, dans cet exemple particulier de réalisation, ladite installation comporte quatre dispositifs de marquage 8 comportant des moyens d'émission d'un rayonnement laser suivant deux directions opposées, lesdits dispositifs de marquage 8 étant positionnés de manière fixe à équidistance des deux convoyeurs 7a,7b, i.e. suivant une ligne médiane parallèle aux trajets de circulation des convoyeurs 7a,7b, lesdits dispositifs de marquage 8 étant détaillés un peu plus loin. Lesdits dispositifs de marquage 8 sont positionnés sur ladite ligne médiane à équidistance les uns des autres avec sensiblement la même distance de séparation entre les récipients 1 transportés par les convoyeurs 7a,7b.

On observera que l'installation pourra comporter plus ou moins de quatre dispositifs de marquage 8 sans pour autant sortir du cadre de l'invention ; Toutefois, il convient de noter que de hautes cadences de production peuvent être obtenues en utilisant seulement quatre dispositifs de marquage 8.

Ainsi, en référence à la figure 1, quatre récipients 1 d'un premier convoyeur 7a sont positionnés au droit des quatre dispositifs de marquage 8 de l'installation, chaque dispositif de marquage 8 laser appliquant alors un marquage dans la ou les régions dites d'informations 6 de chaque récipient 1 du premier convoyeur 7a pendant une durée d'environ 3 secondes, le faisceau laser de marquage desdits dispositifs de marquage 8 étant orienté vers ledit premier convoyeur 7a.

Après cette opération de marquage des récipients 1 du premier convoyeur 7a, en référence à la figure 2, la direction du marquage des dispositifs de marquage 8 est changé de telle manière que le faisceau laser de marquage des dispositifs de marquage 8 soit orienté dans la direction opposée, c'est-à-dire vers le second convoyeur 7b sur lequel les récipients 1 s'étendent au droit desdits dispositifs de marquage 8. Le temps nécessaire pour changer la direction de marquage des dispositifs de marquage 8 est d'environ 0,1 seconde.

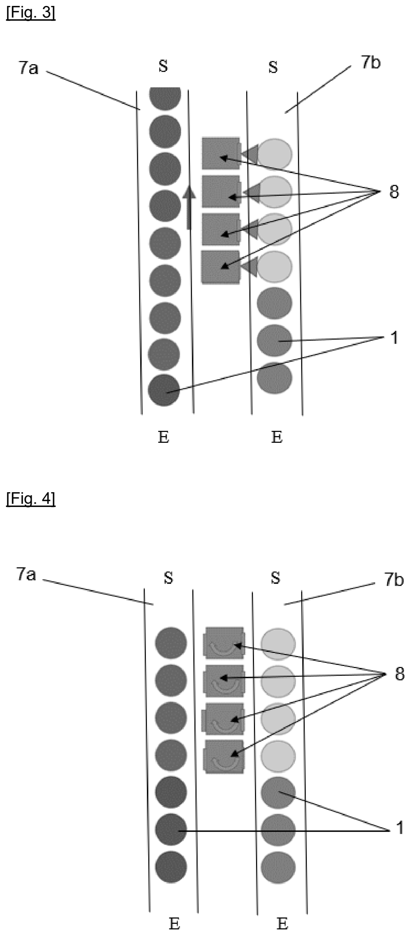

En référence à la figure 3, les quatre récipients 1 du second convoyeur 7b étant positionnés au droit des quatre dispositifs de marquage 8 de l'installation, chaque dispositif de marquage 8 laser applique alors un marquage dans la ou les régions dites d'informations 6 de chaque récipient 1 du second convoyeur 7b pendant une durée d'environ 3 secondes, le faisceau laser de marquage desdits dispositifs de marquage 8 étant orienté vers ledit second convoyeur 7b. Dans le même temps, le premier convoyeur 7a est actionné d'un pas afin de transporter les quatre récipients 1 marqués en dehors de la zone de marquage des dispositifs de marquage 8 et de positionner quatre nouveaux récipients 1 du premier convoyeur 7a au droit des dispositifs de marquage 8.

Après cette opération de marquage des récipients 1 du second convoyeur 7b, en référence à la figure 4, la direction du marquage des dispositifs de marquage 8 est changé de telle manière que le faisceau laser de marquage des dispositifs de marquage 8 soit orienté dans la direction opposée, c'est-à-dire à nouveau vers le premier convoyeur 7a sur lequel les récipients 1 s'étendent au droit desdits dispositifs de marquage 8. Le temps nécessaire pour changer la direction de marquage des dispositifs de marquage 8 est également d'environ 0,1 seconde.

Les récipients 1 du premier convoyeur 7a sont alors marqués par les dispositifs de marquage 8, en référence à la figure1, pendant que les récipients 1 marqués du second convoyeur 7b sont déplacés en actionnant ledit second convoyeur 7b d'un pas selon un nouveau cycle, la durée d'un cycle étant de l'ordre de 6,2 secondes de sorte que l'installation suivant l'invention permet le marquage d'environ 4600 récipients par heure.

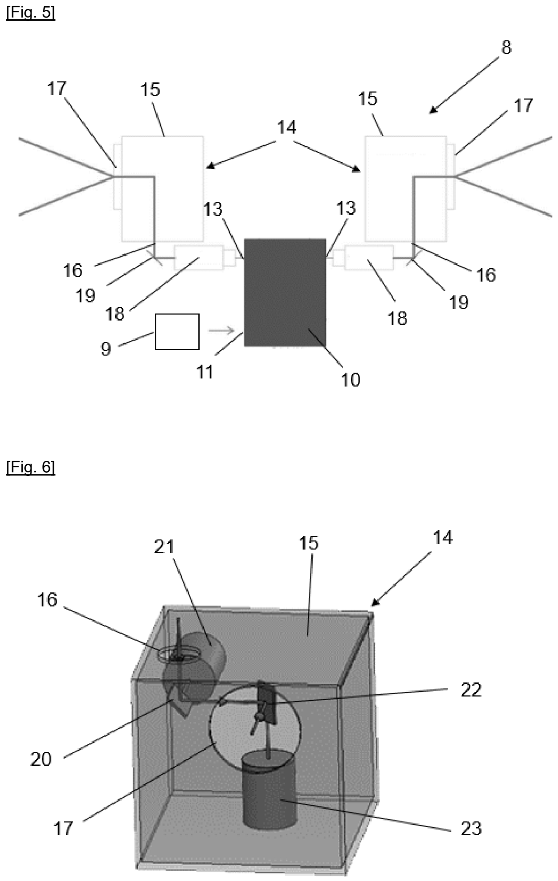

Selon un premier mode de réalisation, en référence à la figure 5, chaque dispositif de marquage 8 comporte au moins une source laser 9, un commutateur de faisceau multicanal 10 comportant une entrée 11 du faisceau laser 12 émis par la source laser 9 et deux sorties 13 d'un faisceau laser et deux têtes de balayage laser 14 montées tête bêche et constituées d'un boitier 15 comportant une fenêtre d'entrée 16 laser apte à recevoir le faisceau laser émis par l'une des sorties 13 du commutateur de faisceau multicanal 10, et une fenêtre de sortie 17 à travers laquelle le faisceau laser de marquage est émis.

Dans cet exemple particulier de réalisation, le dispositif de marquage 8 comporte entre les sorties 13 du commutateur de faisceau multicanal 10 et les têtes de balayage laser 14, un composant optique 18 apte à recentrer de manière dynamique le faisceau laser à la sortie 13 du commutateur de faisceau multicanal 10, ledit composant optique 18 comportant une lentille à mouvement linéaire à cet effet. Accessoirement, un miroir galvanométrique 19 est positionné entre la sortie dudit composant optique 18 et la fenêtre d'entrée 16 de la tête de balayage laser 14.

Par ailleurs, en référence à la figure 6, dans ce premier mode de réalisation représenté sur la figure 5, chaque tête de balayage laser 14 est constituée d'un boitier 15 comportant, sur sa face supérieure, une fenêtre d'entrée 16 laser apte à recevoir le faisceau laser émis par l'une des sorties 13 du commutateur de faisceau multicanal 10, et une fenêtre de sortie 17 à travers laquelle le faisceau laser de marquage est émis. Par ailleurs, à l'intérieur dudit boitier 15, la tête de balayage laser 14 comporte au moins un premier miroir galvanométrique 20 monté sur l'arbre de rotation d'un premier moteur 21 d'entrainement en rotation dudit premier miroir galvanométrique 20, ledit premier miroir galvanométrique 20 s'étendant au droit de la fenêtre d'entrée 16 et l'arbre de rotation du premier moteur 21 d'entrainement en rotation s'étendant sensiblement horizontalement. Ladite tête de balayage 14 comporte également un second miroir galvanométrique 22 monté sur l'arbre de rotation d'un second moteur 23 d'entrainement en rotation dudit second miroir galvanométrique 22, ledit second miroir galvanométrique 22 s'étendant au droit de la fenêtre de sortie 17 du boitier 15 et du premier miroir galvanométrique 20 et l'arbre de rotation du second moteur 23 d'entrainement en rotation s'étendant sensiblement verticalement de sorte que le faisceau laser de marquage sortant de la fenêtre de sortie 17 peut être balayé dans un plan vertical et/ou dans un plan horizontal en actionnant le premier moteur 21 d'entrainement en rotation et/ou le second moteur 23 d'entrainement en rotation des miroirs galvanométriques 20 et 22 respectivement. On notera que la fenêtre de sortie 17 pourra comporter une lentille optique, non représentée sur les figures.

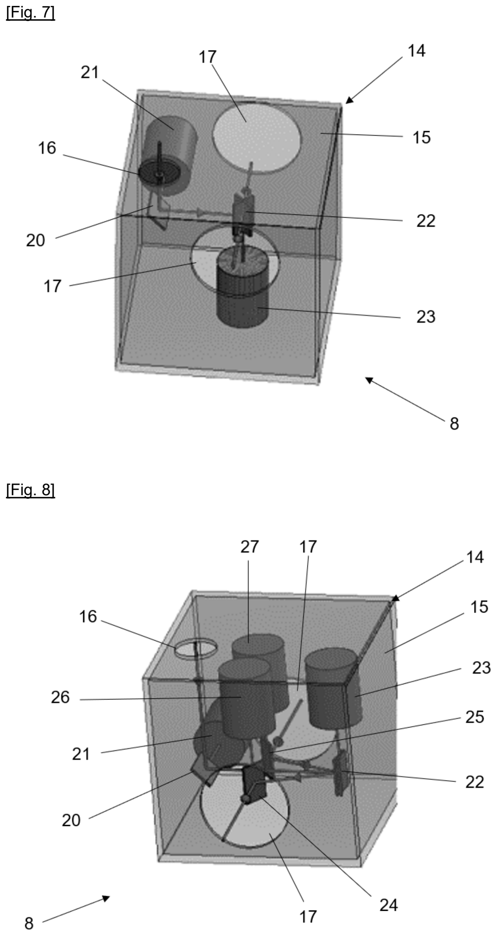

Selon un second mode de réalisation, en référence à la figure 7, chaque dispositif de marquage comporte au moins une source laser, non représentée sur la figure 7, et une tête de balayage 14 laser constituée d'un boitier 15 comportant, sur sa face supérieure, une fenêtre d'entrée laser 16 apte à recevoir le faisceau laser émis par la source laser, au moins un premier miroir galvanométrique 20 monté sur l'arbre de rotation d'un premier moteur d'entrainement en rotation 21 dudit miroir galvanométrique 20 et deux fenêtres de sortie 17 opposées à travers lesquelles le faisceau laser de marquage est émis alternativement à travers une première fenêtre de sortie 17 et une seconde fenêtre de sortie 17.

Ledit boitier 15 de chaque tête de balayage 14 laser est sensiblement parallélépipédique, une des parois, en l'espèce la paroi supérieure du boîtier 15, comportant la fenêtre d'entrée 16 et deux autres parois, en l'espèce deux parois latérales, opposées comportant respectivement une fenêtre de sortie 17. On notera que les fenêtres de sortie 17 pourront comporter une lentille optique, non représentée sur la figure 7.

Par ailleurs, chaque tête de balayage 14 comporte un premier miroir galvanométrique 20 s'étendant au droit de la fenêtre d'entrée 16 et solidaire de l'arbre de sortie d'un premier moteur électrique 20, ledit premier miroir galvanométrique 20 étant apte à réfléchir le faisceau laser passant par la fenêtre d'entrée 16 vers un second miroir galvanométrique 22 dit répartiteur s'étendant au droit des fenêtres de sortie 17 et solidaire de l'arbre de sortie d'un second moteur électrique 23, l'arbre de sortie du second moteur électrique 23 étant orthogonal à l'arbre de sortie du premier moteur électrique 21 qui s'étend sensiblement horizontalement.

Selon un second mode de réalisation, en référence à la figure 8, chaque tête de balayage 14 comporte, de la même manière que précédemment, au moins une source laser, non représentée sur la figure 8, et une tête de balayage 14 laser constituée d'un boitier 15 comportant, sur sa face supérieure, une fenêtre d'entrée laser 16 apte à recevoir le faisceau laser émis par la source laser, au moins un premier miroir galvanométrique 20 monté sur l'arbre de rotation d'un premier moteur d'entrainement en rotation 21 dudit miroir galvanométrique 20 et deux fenêtres de sortie 17 opposées à travers lesquelles le faisceau laser de marquage est émis alternativement à travers une première fenêtre de sortie 17 et une seconde fenêtre de sortie 17.

Ledit boitier 15 de chaque tête de balayage 14 laser est sensiblement parallélépipédique, une des parois, en l'espèce la paroi supérieure du boîtier 15, comportant la fenêtre d'entrée 16 et deux autres parois, en l'espèce deux parois latérales, opposées comportant respectivement une fenêtre de sortie 17. On notera que les fenêtres de sortie 17 pourront comporter une lentille optique, non représentée sur la figure 7.

Chaque tête de balayage 14 comporte un premier miroir galvanométrique 20 s'étendant au droit de la fenêtre d'entrée 16 et solidaire de l'arbre de sortie d'un premier moteur électrique 21, ledit premier miroir galvanométrique 20 étant apte à réfléchir le faisceau laser passant par la fenêtre d'entrée 16 vers un second miroir galvanométrique 22 dit répartiteur et solidaire de l'arbre de sortie d'un second moteur électrique 23, l'arbre de sortie du second moteur électrique étant orthogonal à l'arbre de sortie du premier moteur électrique 21 qui s'étend sensiblement horizontalement, ledit second miroir galvanométrique 22 répartiteur réfléchissant le faisceau laser alternativement sur un troisième 24 et un quatrième 25 miroir galvanométrique s'étendant respectivement au droit des fenêtres de sortie 17, le troisième 24 et le quatrième 25 miroir galvanométrique étant solidaires de l'arbre de sortie d'un troisième moteur électrique 26 et d'un quatrième moteur électrique 27 respectivement. Les arbres de sortie du second moteur électrique 23, du troisième moteur électrique 26 et du quatrième moteur électrique 27 s'étendent parallèlement et verticalement.

Enfin, il est bien évident que les exemples que l'on vient de donner ne sont que des illustrations particulières en aucun cas limitatives quant aux domaines d'application de l'invention.

## Revendications

1. Installation de marquage de récipients (1) en matière thermoplastique obtenus par un procédé de soufflage-étirage, notamment des bouteilles ou flacons, ledit récipient (1) comportant au moins un corps (2), une épaule (3) dans le prolongement dudit corps (2) à une extrémité supérieure de celui-ci, un col (4) dans le prolongement de l'épaule (3) et une paroi (5), ladite paroi (5) comprenant au moins une région (6) dites d'informations, **caractérisée en ce que** ladite installation comprend au moins :
- deux convoyeur (7a,7b) apte à faire circuler lesdits récipients (1) le long de deux trajets de circulation distincts sur deux lignes de conditionnement distinctes depuis une entrée (E) jusqu'à une sortie (S) de chaque convoyeur (7a,7b) ;
- une pluralité de dispositifs de marquage laser (8) apte à apposer des informations dans ladite au moins une région d'informations (6), dite région de marquage laser d'un récipient (1), chaque dispositif de marquage (8) étant positionné entre les deux convoyeurs (7a,7b) et étant aptes à apposer alternativement des informations dans la région d'informations (6) d'un récipient (1) d'un premier convoyeur (7a ou 7b) puis dans la région d'informations (6) d'un récipient (1) du second convoyeur (7b ou 7a).

2. Installation de marquage de récipients suivant la revendication 1 **caractérisée en ce que** chaque convoyeur (7a,7b) consiste en un convoyeur à bande motorisé pas à pas.

3. Installation de marquage de récipients suivant la revendication 2 **caractérisée en ce que** les deux convoyeurs (7a,7b) sont positionnés parallèlement l'un par rapport à l'autre de telle sorte que les trajets de circulation des récipients (1) sur lesdits convoyeurs (7a,7b) présentent la même direction de circulation.

4. Installation de marquage de récipients suivant l'une quelconque des revendications 2 ou 3 **caractérisée en ce que** le pas de chaque convoyeur (7a,7b) à bande est sensiblement égal à la distance séparant quatre récipients (1) transportés par ledit convoyeur (7a,7b).

5. Installation de marquage de récipients suivant l'une quelconque des revendications 2 à 4 **caractérisée en ce que** le premier convoyeur (7a ou 7b) à bande est déplacé d'un pas lorsque le second convoyeur (7b ou 7a) à bande est à l'arrêt et inversement.

6. Installation de marquage de récipients suivant l'une quelconque des revendications 1 à 5 **caractérisée en ce qu'**elle comporte au moins quatre dispositifs de marquage (8) comportant des moyens d'émission d'un rayonnement laser suivant deux directions opposées, lesdits dispositifs de marquage (8) étant positionnés de manière fixe à équidistance des deux convoyeurs (7a,7b), i.e. suivant une ligne médiane parallèle aux trajets de circulation des convoyeurs (7a,7b).

7. Installation de marquage de récipients suivant la revendication 6 **caractérisée en ce que** lesdits dispositifs de marquage (8) sont positionnés sur ladite ligne médiane à équidistance les uns des autres.

8. Installation de marquage de récipients suivant l'une quelconque des revendications 1 à 7 **caractérisée en ce que** chaque dispositif de marquage (8) comporte au moins une source laser (9), un commutateur de faisceau multicanal (10) comportant une entrée (11) du faisceau laser émis par la source laser (9) et deux sorties (13) d'un faisceau laser et deux têtes de balayage (14) laser constituée d'un boitier (15) comportant une fenêtre d'entrée (16) laser apte à recevoir le faisceau laser émis par l'une des sorties (13) du commutateur de faisceau multicanal (10), au moins un miroir galvanométrique (20) monté sur l'arbre de rotation d'un moteur (21) d'entrainement en rotation dudit miroir galvanométrique (20), et une fenêtre de sortie (17) à travers laquelle le faisceau laser de marquage est émis.

9. Installation de marquage de récipients suivant l'une quelconque des revendications 1 à 7 **caractérisée en ce que** chaque dispositif de marquage (8) comporte au moins une source laser (9) et une tête de balayage (14) laser constituée d'un boitier (15) comportant une fenêtre d'entrée (16) laser apte à recevoir le faisceau laser émis par la source laser (9), au moins un miroir galvanométrique (20) monté sur l'arbre de rotation d'un moteur d'entrainement (21) en rotation dudit miroir galvanométrique (20) et deux fenêtres de sortie (14) opposées à travers lesquelles le faisceau laser de marquage est émis alternativement à travers une première fenêtre de sortie (14) et une seconde fenêtre de sortie (14).

10. Installation de marquage de récipients suivant la revendication 9 **caractérisée en ce que** le boitier (15) de chaque tête de balayage (14) laser est sensiblement parallélépipédique, une des parois comportant la fenêtre d'entrée (16) et deux autres parois opposées comportant respectivement une fenêtre de sortie (17).

11. Installation de marquage de récipients suivant la revendication 10 **caractérisée en ce que** chaque tête de balayage (14) comporte un premier miroir galvanométrique (20) s'étendant au droit de la fenêtre d'entrée (16) et solidaire de l'arbre de sortie d'un premier moteur électrique (21), ledit premier miroir galvanométrique (20) étant apte à réfléchir le faisceau laser passant par la fenêtre d'entrée (16) vers un second miroir galvanométrique (22) dit répartiteur s'étendant au droit des fenêtres de sortie (17) et solidaire de l'arbre de sortie d'un second moteur (23) électrique, l'arbre de sortie du second moteur électrique (23) étant orthogonal à l'arbre de sortie du premier moteur électrique (21).

12. Installation de marquage de récipients suivant la revendication 10 **caractérisée en ce que** chaque tête de balayage (14) comporte un premier miroir galvanométrique (20) s'étendant au droit de la fenêtre d'entrée (16) et solidaire de l'arbre de sortie d'un premier moteur électrique (21), ledit premier miroir galvanométrique (20) étant apte à réfléchir le faisceau laser passant par la fenêtre d'entrée vers un second miroir galvanométrique (22) dit répartiteur et solidaire de l'arbre de sortie d'un second moteur électrique (23), l'arbre de sortie du second moteur électrique (23) étant orthogonal à l'arbre de sortie du premier moteur (21) électrique, ledit second miroir galvanométrique répartiteur (22) réfléchissant le faisceau laser alternativement sur un troisième (24) et un quatrième (25) miroir galvanométrique s'étendant respectivement au droit des fenêtres de sortie (14), le troisième (24) et le quatrième (25) miroir galvanométrique étant solidaire de l'arbre de sortie d'un troisième moteur électrique (26) et d'un quatrième moteur électrique (27) respectivement.

13. Installation de marquage de récipients suivant la revendication 12 **caractérisée en ce que** les arbres de sortie du second moteur électrique (23), du troisième moteur électrique (26) et du quatrième moteur électrique (27) s'étendent parallèlement.
